# EUROPÄISCHE PATENTANMELDUNG

(11) **EP 4 432 276 A1**
(43) Veröffentlichungstag der Anmeldung: **18.09.2024**
(21) Anmeldenummer: 23162331.5
(22) Anmeldetag: 16.03.2023
(51) Int. Cl.: G10L 15/06, G10L 15/32, G06F 40/30, G10L 15/18

(54) **TECHNIKEN ZUR VERBESSERUNG VON VIRTUELLEN ASSISTENTEN - INSBESONDERE VON VIRTUELLEN SPRACHASSISTENTEN**

(71) Anmelder: Deutsche Telekom AG, 53113 Bonn (DE)
(72) Erfinder: Minow, Jascha, 64625 Bensheim (DE); Jahn, Carl, 65191 Wiesbaden (DE); El Mallouki, Said, 56329 St. Goar (DE)
(74) Vertreter: Braun-Dullaeus Pannen Emmerling Patent- & Rechtsanwaltspartnerschaft mbB

(57) **Zusammenfassung**

Die vorliegende Erfindung betrifft Techniken zum Bereitstellen von Trainingsdaten für einen virtuellen Assistenten, insbesondere des virtuellen Sprachassistenten, mit den folgenden Schritten:
• Vorhalten einer NLU-Engine aufweisend eine erste NLU-Engine-Komponente und eine zweite NLU-Engine-Komponente;
• Bereitstellen zumindest einer Nutzeranfrage an die NLU-Engine, wobei die Nutzeranfrage sowohl der ersten NLU-Engine-Komponente als auch der zweiten NLU-Engine-Komponente zugänglich gemacht wird, wobei sich die erste NLU-Engine-Komponente von der zweiten NLU-Engine-Komponente unterscheidet;
• Analysieren der Nutzeranfrage mittels der ersten NLU-Engine-Komponente als auch mittels der zweiten NLU-Engine-Komponente, wobei die erste NLU-Engine-Komponente einen ersten Bedeutungsinhalt BI₁ und die zweiten NLU-Engine-Komponente einen zweiten Bedeutungsinhalt BI₂ aus der Nutzeranfrage extrahiert.
• Berechnung eines Scores Sü im Hinblick auf eine Übereinstimmung der extrahierten Bedeutungsinhalte Sü=Sü(BI₁, B1₂), wobei der Wert des berechneten Scores Sü mit einem Grenzwert G_{H} verglichen wird und die Nutzeranfrage und/oder Metadaten der Nutzeranfrage bei Überschreitung des Grenzwertes zum Training des virtuellen Assistenten verwendet wird.

## Beschreibung

Die vorliegende Erfindung betrifft das technische Gebiet von virtuellen Assistenten und insbesondere wie die Voraussetzungen geschaffen werden können, dass deren Erkennungsgenauigkeit verbessert wird. Hierfür werden nachstehend ein Verfahren, ein Controller, eine Data-Shifting-Einheit und ein virtueller Assistent angegeben

Aus dem Stand der Technik bekannt sind die gängigen virtuellen Assistenten, die immer mehr Einzug in unser tägliches Leben finden. Zunehmend handelt es sich hierbei im speziellen um virtuelle Sprachassistenten. Die Aufgaben an solche virtuellen Assistenten sind vielfältig und umfassen einfache Aufgaben, wie etwa das Stellen eines Teilnehmers, die Ausgabe einer Wettervorhersage oder das Aufrufen eines Radiosenders als auch komplexere Problemabläufe wie zum Beispiel kontextbasierte Fragen, Spiele oder Kochrezepte, die sowohl einen Dialog als auch einen bestimmten Ablauf voraussetzen und benötigen. Generell ist es das Ziel von Entwicklern der virtuellen Assistenten, den Kunden immer mehr Funktionen bereitzustellen und zu verbessern - auch um ihren Marktanteil zu erhöhen.

Den virtuellen Assistenten mit mehr Funktionen auszustatten und zu verbessern setzt in der Regel eine aufwändige Entwicklungsarbeit voraus, insbesondere stehen die Produktentwickler vor dem Problem herauszufinden, wie ein potentieller Kunde mit dem virtuellen Assistenten interagieren möchte. Hierbei liegt der Fokus auf den von dem Kunden möglicherweise verwendeten Sätzen - den sogenannten Utterances - aber auch auf dem jeweiligen Dialog. Dabei unterscheiden sich die Dialoge und Utterances deutlich, wenn Kunden einen Assistenten für Text oder Sprache ansprechen - was wiederum einen zusätzlichen Aufwand für die Produktentwickler bedeutet.

Um eine neue Funktion umzusetzen, müssen aktuell Voice UI Designer (meistens ausgebildete Computerlinguisten) beschäftigt werden, um mögliche Utterances und entsprechende Dialogabläufe und Strukturen zu erstellen, die mit hoher Wahrscheinlichkeit von den Kunden verwendet werden können. Je mehr Kunden die neue Funktion nutzen, desto mehr Daten fallen an, sodass prinzipiell die jeweilige Natural Language Understanding (NLU) Komponente mit diesen neuen Daten trainiert werden kann. Hierbei stellt sich die Herausforderung, dass die angefallenen Daten annotiert werden müssen, um sie für das Training einer künstlichen Intelligenz zugänglich zu machen, d. h. konkret, dass die Computeranalysten die Nutzereingaben einsehen müssen, wodurch sich datenschutzrechtliche Probleme ergeben können.

Danach werden diese neuen Daten manuell als Trainingsdaten der NLU hinzugefügt und diese muss erneut trainiert werden. In der Praxis werden die neu trainierten NLU Modelle dann manuell mit den bestehenden Modellen verglichen, um herauszufinden, ob das neue Modell eine bessere Performance aufweist als das alte Modell.

In diesem Zusammenhang werden an dieser Stelle einige der nachstehend verwendeten Begriffe aus Verständlichkeitsgründen erläutert, obwohl diese dem Fachmann geläufig sind.

Skills: Skills sind Fähigkeiten eines virtuellen Assistenten, die auf bestimmte Aufgaben spezialisiert sind. Zum Beispiel die Verfolgung des Inventars, die Einreichung von Zeitkarten, Ausgabe einer Wettervorhersage oder die Erstellung von Spesenabrechnungen.

Intents: Mit Hilfe von Intents kann ein Assistent verstehen, was der Benutzer von ihm erwartet. Ein Intent kategorisiert typische Benutzeranfragen nach den Aufgaben und Aktionen, die ein Skill ausführt. Der Intent "Bestelle Pizza" kennzeichnet zum Beispiel eine direkte Anfrage "Ich möchte eine Pizza bestellen" und eine Andere, die eine Anfrage "Ich habe Lust auf eine Pizza" impliziert.

Während Intents Wörter und Phrasen einer bestimmten Aktion zuordnen, fügen Entities dem Intent selbst Kontext hinzu. Sie helfen dabei, die Absicht vollständiger zu beschreiben, und ermöglichen es dem virtuellen Assistenten, eine Benutzeranfrage auszuführen. Die Absicht "Bestelle Pizza" zum Beispiel beschreibt eine Benutzeranfrage, allerdings nur in allgemeiner Form. Um den Intent zu vervollständigen, wird diese Absicht durch die Entität PizzaSize ergänzt, die Werte wie groß, mittel und klein aus den Benutzereingaben identifiziert.

Der vorliegenden Erfindung liegt daher die Aufgabe zu Grunde, Techniken anzugeben, die es ermöglichen einen virtuellen Assistenten, insbesondere einen virtuellen Sparassistenten, effizienter zu trainieren und somit die eingangs genannten Nachteile des Stands der Technik zumindest zum Teil zu beseitigen.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Erfindungsgemäß ist ein Verfahren zum Bereitstellen von Trainingsdaten für einen virtuellen Assistenten, insbesondere des virtuellen Sprachassistenten, angegeben, wobei das Verfahren die folgenden Schritte aufweist:
- Vorhalten einer NLU-Engine aufweisend eine erste NLU-Engine-Komponente und eine zweite NLU-Engine-Komponente, wobei sich die erste die erste NLU-Engine-Komponente von der zweiten NLU-Engine-Komponente unterscheidet;
   ∘ die NLU-Engine kann auf einem Server implementiert sein. Die NLU-Engine-Komponenten basieren auf einer künstlichen Intelligenz, insbesondere in der Form von neuronalen Netzwerken, und sind eingerichtet Nutzeranfragen in der Form von bekannten virtuellen Assistenten zu beantworten. Die NLU-Engine-Komponenten können insbesondere schon durch einen, nicht zu dem nachstehend beschriebenen Verfahren gehörenden, zuvor durchgeführten Trainingsprozess trainiert worden sein;
   ∘ die erste NLU-Engine-Komponente und eine zweite NLU-Engine-Komponente können mit verschiedenen Trainingssätzen trainiert worden sein und/oder auf verschiedenen Modellen von neuronalen Netzwerken oder Algorithmen beruhen, sodass sich deren Verschiedenheit voneinander ergibt. Die Verschiedenheit hat zur Folge, dass Nutzer Anfragen von der ersten NLU-Engine-Komponente und der zweiten NLU-Engine-Komponente nicht in jedem Fall die gleichen Ergebnisse liefert;
- Bereitstellen zumindest einer Nutzeranfrage an die NLU-Engine, wobei die Nutzeranfrage sowohl der ersten NLU-Engine-Komponente als auch der zweiten NLU-Engine-Komponente zugänglich gemacht wird;
   ∘ die Nutzeranfrage kann eine sogenannte Utterance sein. Ganz allgemein kann es sich bei der Nutzeranfrage um eine textbasierte Eingabe und/oder um ein Audiosignal handeln. Der virtuelle Assistent kann dementsprechend sowohl für eine textbasierte Eingabe und/oder für eine Spracheingabe eingerichtet sein;
   ∘ da sich die erste NLU-Engine-Komponente von der zweiten NLU-Engine-Komponente unterscheidet, kann es sein, dass die Nutzeranfrage von der jeweiligen Komponente verschieden analysiert wird;
- Analysieren der zumindest einen Nutzeranfrage mittels der ersten NLU-Engine-Komponente als auch mittels der zweiten NLU-Engine-Komponente, wobei die erste NLU-Engine-Komponente einen ersten Bedeutungsinhalt BI₁ und die zweite NLU-Engine-Komponente einen zweiten Bedeutungsinhalt BI₂ aus der Nutzeranfrage extrahiert;
   ∘ die Engine-Komponenten wurden insbesondere im Hinblick auf eine Analyse dieser Bedeutungsinhalte hintrainiert. Bedeutungsinhalte für virtuellen Assistenten, insbesondere virtuelle Sprachassistenten, sind in der Regel die sogenannten Intents und/oder Entities - die also gewissermaßen versuchen einen gewissen Sinn/Bedeutung ausdehnte Anfrage für eine spätere Bearbeitung zu extrahieren;
   ∘ werden gleich mehrere Nutzeranfragen analysiert, können demzufolge eine Vielzahl solcher Bedeutungsinhalte extrahiert werden;
- Berechnung eines Scores Sü im Hinblick auf eine Übereinstimmung der extrahierten Bedeutungsinhalte S_{Ü}=S_{Ü}(BI₁, BI₂), wobei der Wert des berechneten Scores Sü mit einem Grenzwert G_{H} verglichen wird und die Nutzeranfrage und/oder Metadaten der Nutzeranfrage bei Überschreitung des Grenzwertes zum Training des virtuellen Assistenten verwendet wird.
   ∘ Der Score Sü kann einen Wert zwischen 0 und 1 aufweisen und exemplarisch wie folgt berechnet werden: i) Wird nur eine einzige Nutzeranfrage analysiert und sind die extrahierten Bedeutungsinhalte identisch, also BI₁ = BI₂, kann der Score als 1 berechnet werden. Sind die extrahierten Bedeutungsinhalte komplett unterschiedlich, kann der Score als 0 berechnet werden. Da die Bedeutungsinhalte aber auch in die Entities (E) und Intents (I) unterteilt werden können, sodass BIᵢ = (Eᵢ, Iᵢ) gilt, kann sich ergeben E₁ = E₂ und I₁ ≠ I₂. in diesem Fall könnte der Score Sü als 0,5 berechnet werden. Prinzipiell ist es so also möglich, dass bei einer Vielzahl von gleichzeitig analysierten Nutzeranfragen der Score aus dem Verhältnis der übereinstimmenden Ergebnisse dividiert durch die möglichen Verhältnisse gebildet wird. Die Erfindung erfasst aber auch weitere Möglichkeiten eines solchen Score mathematisch, insbesondere unter Zuhilfenahme von statistischen Methoden, zu berechnen;
   ∘ die Metadaten können insbesondere die Intents, Entities, Genauigkeit, und/oder den Score Sü umfassen;
   ∘ insbesondere können die Nutzeranfrage und/oder Metadaten der Nutzeranfrage zu dem Ground-Truth Datensatz zugefügt werden, wenn der Grenzwert überschritten wird.

Der Clou der Erfindung ist es also, dass durch hierbei nur solche Nutzeranfragen und/oder deren Metadaten als Trainingsdaten zur weiteren Verbesserung des virtuellen Assistenten infrage kommen, die von zwei verschiedenartigen NLU-Engine-Komponenten analysiert wurden und dann auch noch eine ausreichende Übereinstimmung hinsichtlich der extrahierten Ergebnisse zeigen müssen, die über dem Grenzwert liegt. Hierdurch werden effizient nicht geeignete Trainingsdaten aussortiert und der virtuelle Assistent kann insbesondere selbstlernend stetig besser werden. Insbesondere der Score Sü, der auch als Fitting Score, bezeichnet werden kann, sagt also aus, ob die Utterance des Nutzers erfolgreich erkannt wird oder nicht. Insbesondere können diese neu kreierten Trainingsdaten dann verwendet werden um andere NLU Komponenten erneut zu trainieren, die bessere Algorithmen verwenden um zum Beispiel mit großen Datenmengen an Trainingsdaten umzugehen.

In einer bevorzugten Ausgestaltung der Erfindung werden zur Berechnung des Scores Sü die jeweiligen Ergebnisse der Bedeutungsinhalte BI₁ und BI₂ im Hinblick auf eine bestimmte Nutzeranfrage miteinander verglichen. Diese Ausgestaltung ist für den Fall relevant, dass eine Vielzahl von Nutzeranfragen, also insbesondere in der Form von Utterances, analysiert und deren Bedeutungsinhalte extrahiert werden. Die Problematik soll am Fall von zwei Nutzeranfragen illustriert werden: die erste Nutzeranfrage kann zu den vorliegenden extrahierten Ergebnissen führen: E_{1,1} = xe, I_{1,1} = xi, E_{2,1} = ex; I_{2,1} = ix; und für die zweite Nutzeranfrage: E_{1,2} = ex, I_{1,2} = ix, E_{2,2} = xe; I_{2,2} = xi. In diesem Fall hätten die erste und die zweite NLU-Engine-Komponente also keine Übereinstimmung im Hinblick auf eine bestimmte Nutzeranfrage, wenn man die Ergebnisse jedoch unabhängig von der bestimmten Nutzeranfrage betrachten würde, würde eine 100-prozentige Übereinstimmung folgen, da jede Engine-Komponente "insgesamt" dieselben Intents und Entities ergibt. Hieraus folgt also, dass es vorteilhaft ist die Ergebnisse im Hinblick auf eine bestimmte Nutzeranfrage zu vergleichen. Dies kann beispielsweise dadurch passieren, dass jeder Nutzeranfrage eine eindeutig identifizierbare ID erhält und das Ergebnis der jeweiligen Komponente in einer Tabelle der ID zugeordnet abgelegt wird. Auf diese Weise wird es möglich, dass Ergebnis im Hinblick auf eine bestimmte Nutzeranfrage miteinander zu Berechnung des Scores verglichen werden können.

Vorzugsweise analysieren die erste NLU-Engine-Komponente und die zweite NLU-Engine-Komponente die zumindest eine Nutzeranfrage parallel. Durch die parallele Abarbeitung kann die Nutzeranfragen effizient bearbeitet und analysiert werden. Dieses Verfahren ist deutlich effizienter als eine separate, abgekapselte Bearbeitung der Nutzeranfragen. Die Effizienz ergibt sich aus einer höheren Verarbeitungsgeschwindigkeit sowie einer signifikant höheren Erkennungsgenauigkeit. Insbesondere in Bezug auf die Berechnung der Konfidenz, da bei unterschiedlichen Konfidenzen der beiden NLU Komponenten, ein Gesamtkoeffizient berechnet werden kann, der eine deutlich genauere Aussage über die Wahrscheinlichkeit der extrahierten Metadaten ergibt. Ein Beispiel: NLU Komponente A errechnet eine Konfidenz von 1, während NLU Komponente B eine 0 berechnet. Daraus ergibt sich aufgrund dieser sehr grossen Abweichung, ein Verwerfen des Ergebnisses. Zusätzlich erhöht in einem weiteren Beispiel, in dem NLU Komponente A 0,65 und NLU Komponente B 0,7 errechnet sich sogar ein höherer Score, da die Ergebnisse in Summe höher gewichtet werden, als ein Einzelergebnis.

Die erste NLU-Engine-Komponente und die zweite NLU-Engine-Komponente können auf verschiedenen Modellen, Algorithmen und/oder Trainingsdaten basieren. Jede einzelne dieser Möglichkeiten die NLU-Engine-Komponente verschiedenartig auszugestalten und insbesondere eine Kombination dieser Möglichkeiten machen die erste NLU-Engine-Komponente hinsichtlich ihrer Eigenschaften verschiedenartig. Ein Gedanke hierbei ist, dass wenn selbst verschiedenartige NLU-Engine-Komponente dieselben Bedeutungsinhalte liefern, dann handelt es sich mit einer hohen Wahrscheinlichkeit eben um richtig erkannte Bedeutungsinhalte hinsichtlich der Nutzeranfragen. In der Regel basieren die Modelle auf neuronalen Netzwerken, sodass eine künstliche Intelligenz durch entsprechendes Training ausgebildet werden kann. Insbesondere können die NLU-Engine-Komponente in eine Art ausgestaltet sein, dass diese verschieden gut mit Trainingsdatensätzen von verschiedener Größe umgehen können. Bei NLU-Engine-Komponenten, die für kleinere Trainingsdatensätze vorgesehen sind, können Veränderungen schneller beobachtet werden, wohingegen NLU-Engine-Komponenten für größere Datensätze in der Regel robuster und genauer sind.

In eine Ausgestaltung der Erfindung weist die erste NLU-Engine-Komponente zumindest zwei NLU-Engine-Module und/oder die zweite NLU-Engine-Komponente zumindest zwei NLU-Engine-Module auf. Hierdurch wird das Verfahren noch flexibler. Jedes der Module kann, wie vorstehend für die Komponenten erwähnt, verschiedenartig sein und insbesondere auf verschiedenen Modellen, Algorithmen und/oder Trainingsdaten basieren dementsprechend unterschiedliche Bedeutungsinhalte für die Nutzeranfrage extrahieren. Das erste Modul der NLU-Engine-Komponente kann demnach den Bedeutungsinhalt BI₁, und das zweite Modul der ersten NLU-Engine-Komponente kann demnach den Bedeutungsinhalt BI₃ extrahieren. Folglich kann das zweite Modul der NLU-Engine-Komponente demnach den Bedeutungsinhalt BI₂, und das zweite Modul der zweiten NLU-Engine-Komponente kann demnach den Bedeutungsinhalt BI₄ extrahieren. Der Übereinstimmungs-Score kann demnach wie folgt berechnet werden: S_{Ü}=S_{Ü}(BI₁, BI₂, BI₃, BI₄). Hierdurch wird nochmals die Wahrscheinlichkeit erhöht, dass die Nutzeranfrage korrekt analysiert wurde.

Bevorzugt kann jede NLU-Engine-Komponente und/oder jedes NLU-Engine-Modul eine ihr zugeordnete Confidence Ci berechnen, die ihre Genauigkeit der richtigen Extrahierung der Bedeutungsinhalte wiedergibt. Dies ermöglicht es beispielsweise zu erkennen, wenn ein bestimmtes NLU-Engine-Modul sich signifikant von den anderen Modulen unterscheidet, insbesondere schlechtere Ci Werte liefert. Dies könnte ein Hinweis auf ein falsches Training des entsprechenden Moduls sein, sodass dieses Modul zielgerichtet zurückgesetzt, neu trainiert und/oder verändert werden kann. Insbesondere können dann Datensätze aus dem sogenannten Ground-Truth verwendet werden, um dieses Modul erneut zu testen.

In einer bevorzugten Ausgestaltung werden die Metadaten zum Training der zweiten NLU-Engine-Komponente verwendet, wenn der Confidence Wert C₁ der ersten NLU-Engine-Komponente größer ist als der Confidence Wert C₂ der zweiten NLU-Engine-Komponente. Die erste NLU-Engine-Komponente ist hierbei für kleinere Trainingsdaten ausgelegt. Entsprechendes gilt auch für die Module der ersten NLU-Engine-Komponente.

Vorzugsweise wird der Scores Sü mit einem Grenzwert G_{T} verglichen und die Nutzeranfrage und/oder die Metadaten bei Unterschreitung des Grenzwertes G_{T} als falsches Ergebnis markiert und zum Training des virtuellen Assistenten verwendet wird und/oder dass die Nutzeranfrage und/oder die Metadaten verworfen wird, falls G_{T} < S_{Ü} < G_{H}. Dies hat den Vorteil, dass ein effektives überwachten Training eines neuronalen Netzwerkes auch umfasst, dem neuronalen Netzwerk mitzuteilen, was ein falsches Ergebnis ist. Extrahieren im Extremfall alle NLU-Engine-Module verschiedene Ergebnisse, wird dies zu einem sehr geringen Score Sü führen, der kleiner ist als G_{T} und mit einer hohen Wahrscheinlichkeit die Tatsache widerspiegelt, dass die extrahierten Bedeutungsinhalte falsch sind. Befindet sich der Wert von Sü allerdings zwischen diesen beiden Grenzwerten G_{T} < S_{Ü} < G_{H}, kann nicht mit genügender Sicherheit abgeschätzt werden, ob es sich um negative oder positive Trainingsdaten handelt, sodass die entsprechende Berücksichtigung dieser Daten für das Training eher nachteilig wäre, sodass diese besser verworfen werden.

In einer Ausführungsform umfassen die Bedeutungsinhalte Intents und/oder Entities, also BIᵢ = (Iᵢ, Eᵢ).

In einer bevorzugten Ausführungsform werden die die extrahierten Intents und/oder Entitys bei Überschreitung eines Grenzwertes Gs an einen Skill des virtuellen Assistenten weitergeleitet. Dies stellt vorteilhaft sicher, dass der virtuelle Assistent sich selbst verbessern kann aber auch gleichzeitig eine funktionale Einheit für den Nutzer darstellt. Der Grenzwert Gs zur Weitergabe an den ist insbesondere von dem Grenzwert G_{H} verschieden. Es ist zweckmäßig den Grenzwert Gs kleiner dem Grenzwert G_{H} vorzusehen, der auf jeden Fall vermieden werden soll, dass falsche Daten als Trainingsdaten für den virtuellen Assistenten verwendet werden sollen, Nutzer aber jedenfalls eine Antwort des virtuellen Assistenten insbesondere des virtuellen Sprachassistenten erwarten.

In einer bevorzugten Ausführungsform des Verfahrens werden die Intents und Entities zur Berechnung des Scores Sü verschiedenartig gewichtet. Es ist insbesondere von Vorteil, wenn die Entities stärker gewichtet werden.

Gemäß einem zweiten Aspekt der Erfindung ist ein Controller, insbesondere eingerichtet zur Ausführung zumindest der ihm technisch zugeordneten Schritte des vorstehend beschriebenen Verfahrens, zur vergleichenden Bewertung von Analysen von zumindest einer ersten NLU-Engine-Komponente und einer zweiten NLU-Engine-Komponente angegeben, wobei der Kontrolle aufweist:
- einen ersten Kommunikationskanal eingerichtet zum Empfang der extrahierten Bedeutungsinhalte BI₁, BI₂ der ersten NLU-Engine-Komponente und der zweiten NLU-Engine-Komponente;
- einen ersten Prozessor eingerichtet mit Mitteln zur Berechnung (beispielsweise mittels eines Algorithmus) eines Scores Sü im Hinblick auf eine Übereinstimmung der extrahierten Bedeutungsinhalte S_{Ü}=S_{Ü}(BI₁, BI₂), wobei der Prozessor eingerichtet ist zumindest den Sü, insbesondere Metadaten des Trainingsdatensatzes, weiterzuleiten;
- einen zweiten Kommunikationskanal eingerichtet zum Weiterleiten des Scores Sü, insbesondere der Metadaten.

Gemäß einem dritten Aspekt der Erfindung ist eine Data-Shifting-Einheit, insbesondere eingerichtet zur Ausführung der Schritte die der Data-Shifting-Einheit technisch zugeordnet sind des Verfahrens, zur selektiven Weiterleitung von Daten angegeben, wobei die Data-Shifting-Einheit aufweist:
- eine erste Kommunikationsschnittstelle eingerichtet zum Empfang des mittels des vorstehend beschrieben Controllers berechneten Scores S_{Ü}=S_{Ü}(BI₁, BI₂), insbesondere der Metadaten der Nutzeranfrage;
- einen zweiten Prozessor eingerichtet zum Vergleich des berechneten Scores Sü mit einem Grenzwert G_{H}, wobei der zweite Prozessor eingerichtet ist die Nutzeranfrage und/oder die Metadaten des bei Überschreitung des Grenzwertes zum Training eines virtuellen Assistenten weiterzuleiten;
- eine zweite Kommunikationsschnittstelle eingerichtet zur Weiterleitung der Nutzeranfrage und/oder Metadaten als Trainingsdatensatz.

Gemäß einem vierten Aspekt der Erfindung ist ein virtueller Assistent, insbesondere virtueller Sprachassistent, angegeben, der zur Ausführung des vorstehend beschriebenen Verfahrens eingerichtet ist, aufweisend
- zumindest ein erstes Kommunikationsinterface eingerichtet zum Empfang von zumindest einer Nutzeranfrage;
- eine Recheneinheit, wobei auf der Recheneinheit zumindest eine erste NLU-Engine-Komponente zum Extrahieren eines ersten Bedeutungsinhalt BI₁ aus einer Nutzeranfrage und eine zweite zweiten NLU-Engine-Komponente zum Extrahieren eines zweiten Bedeutungsinhalt BI₂ aus der Nutzeranfrage implementiert ist, wobei die erste NLU-Engine-Komponente und die zweite erste NLU-Engine-Komponente voneinander verschieden ausgebildet sind;
   o wie vorstehend schon beschrieben, können die NLU-Engine-Komponente jeweils noch zumindest zwei NLU-Engine-Module aufweisen, wobei die Extrahierung entsprechend angepasst wird;
- den vorstehend beschriebenen Controller nach Anspruch;
- die vorstehend beschriebene Data-Shifting-Einheit.

Dies bietet also den Vorteil, dass der virtuelle Assistent geeignete neue Trainingsdaten aus der zumindest einen Nutzeranfrage ermittelt und hierdurch effizient selbstlernend besser wird.

Der virtuelle Assistent kann auch so eingerichtet sein, dass er die Bedeutungsinhalte Bᵢ, insbesondere denjenigen Bedeutungsinhalt Bᵢ für den die ihm zugeordnete NLU-Engine-Komponente oder dass ihm zugeordnete NLU-Engine-Modul den höchsten Genauigkeitswert berechnet hat, an einen entsprechenden Skill weiterleitet, der die Nutzeranfrage bearbeitet und eine entsprechende Antwort für den Nutzer erstellt und dem Nutzer wiedergibt. Dies hat den Vorteil, dass der virtuelle Assistent zugleich ein funktionierendes System ist, dass insbesondere nicht extra zu Trainingszwecken "offline" gehen muss.

Gemäß einem fünften Aspekt der Erfindung ist ein Computerprogramm, umfassend Befehle, angegeben, die bei der Ausführung des Programms durch einen Computer diesen veranlassen, das Verfahren/die Schritte des vorstehend beschriebenen Verfahrens auszuführen.

Weitere vorteilhafte Ausgestaltungsmerkmale der vorliegenden Erfindung sind in den Patentansprüchen definiert.

Im Folgenden werden bevorzugte Ausführungsbeispiele der vorliegenden Erfindung unter Bezugnahme auf die begleitenden Figuren erläutert:
- Fig. 1:: zeigt schematisch einen erfindungsgemäßen virtuellen Assistenten;
- Fig. 2:: zeigt das erfindungsgemäße Verfahren zur Optimierung des virtuellen Assistenten;

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

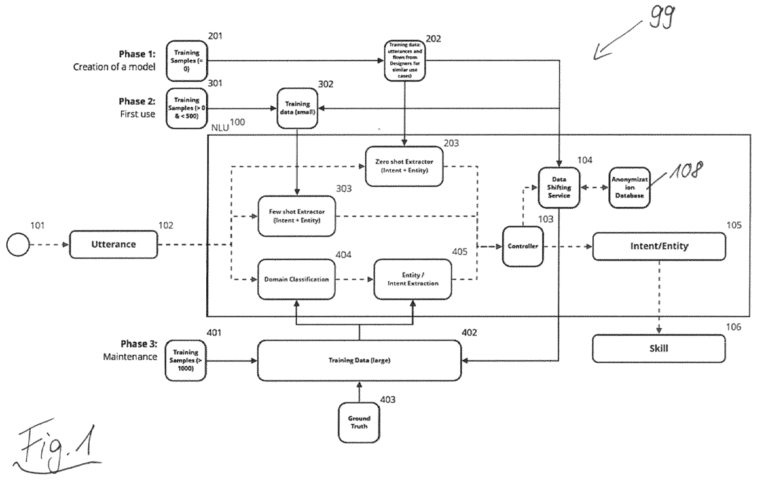

Fig. 1 zeigt schematisch einen erfindungsgemäßen virtuellen Assistenten 99, insbesondere ein virtuellen Sprachassistenten 99. Der virtuelle Assistent 99 umfasst zumindest eine NLU-Engine 100, und eine Skill-Funktionalität 106 sowie ein entsprechendes Kommunikationsinterface zum Datenaustausch mit einem Nutzer 505, insbesondere zum Empfang eine Nutzeranfrage 101, die insbesondere als Utterance 102 ausgebildet ist, und zum Versenden einer entsprechenden Antwort an den Nutzer 505. Vermittels desselben oder eines weiteren Kommunikationsinterfaces können dem virtuellen Assistenten 99 Trainingsdaten zugänglich gemacht werden.

Die NLU-Engine 100 weist eine erste NLU-Engine-Komponente 203, 303 auf, die ein erstes NLU-Engine-Modul 203 und ein zweites NLU-Engine-Modul 303 umfasst.

Das erste NLU-Engine-Modul 203 ist ein sogenannter "Zero shot Extractor" 203, der insbesondere mit den Trainingsdaten 202 trainiert wird, wobei die Trainingsdaten 202 Utterances und Flows von Designern für ähnliche Use-Cases aufweisen. Die Trainingsdaten 202 können aus einer Phase 1 "Modellerstellung" stammen und eine Samplegröße von 0 aufweisen.

Das zweite NLU-Engine-Modul 303 ist ein sogenannter "Few shot Extractor" 303, der insbesondere mit den Trainingsdaten 302 trainiert wird, wobei die Trainingsdaten 302 ein kleines Set von Trainingsdaten ausbilden. Die Trainingsdaten 302 können aus einer Phase 2 "erste Nutzung" mit einer Samplegröße von >0 und <500 stammen.

Die NLU-Engine 100 weist eine zweite NLU-Engine-Komponente 404, 405 auf, die ein drittes NLU-Engine-Modul 404 und ein viertes NLU-Engine-Modul 405 umfasst.

Das dritte NLU-Engine-Modul 404 ist eine sogenannte "Domain Classifiaction" 404 und wird mit einem großen Trainingsdatensatz 402 trainiert. Der große Trainingsdatensatz 402 ist der Phase 3 "Maintenance" mit einer Samplegröße von >1000 zugeordnet und bezieht seine Daten insbesondere aus der sogenannten "Ground-Truth" 403.

Das vierte NLU-Engine-Modul 405 ist eine sogenannte "Entity/Intent-Extraction Unit" 404 und wird ebenfalls mit dem großen Trainingsdatensatz 402 trainiert.

Die als Utterance 102 bereitgestellte Nutzeranfrage 101 wird also jeweils von den vier NLU-Engine-Modulen 203, 303, 404, 405 analysiert, wobei jedes Modul individuell die folgenden Metadaten aus der Nutzeranfragen 101 extrahiert: BIᵢ(Iᵢ, Eᵢ, Cᵢ), wobei C für die Genauigkeit steht und i = 1 bis 4 gilt.

Die Daten BIᵢ werden an einen Controller 103 gesendet, der die extrahierten Daten BIᵢ im Hinblick auf ihre Übereinstimmung untersucht und einen entsprechenden Score S_{Ü}=S_{Ü}(BI₁, BI₂, BI₃, BI₄) berechnet, der den Grad der Übereinstimmung wiedergibt. Der Controller 103 kann ebenfalls ein Bestandteil der NLU-Engine 100 sein.

Diese Daten können an eine Data-Shifting-Einheit 104 übergeben werden, wobei die Data-Shifting-Einheit 104 ebenfalls Bestandteil der NLU-Engine 100 sein kann. Die Data-Shifting-Einheit 104 vergleicht den Wert der berechneten Scores S_{Ü}=S_{Ü}(BI₁, BI₂, BI₃, BI₄) mit einem Grenzwert G_{H} und markiert die Nutzeranfrage und/oder Metadaten der Nutzeranfrage bei Überschreitung des Grenzwertes als zum weiteren Training des virtuellen Assistenten geeignet und/oder geeignet um zu den Trainingsdaten 402, insbesondere dem sogenannten Ground-Truth Datensatz, hinzugefügt werden zu können.

Die Data-Shifting-Einheit 104 kann zudem Daten mit einer Anonymization Database 108 austauschen, deren Funktionsweise nachstehend beschrieben wird.

Bei der Überschreitung eines Grenzwertes Gₛ können die Metadaten von der Data-Shifting-Einheit 104 an eine Intent/Entity-Engine 105 weitergeleitet werden, die diese an den Skill106 weitergibt, der seinerseits eine Antwort für den Nutzer hinsichtlich der Nutzeranfrage 101 kreiert und an den Nutzer ausgibt.

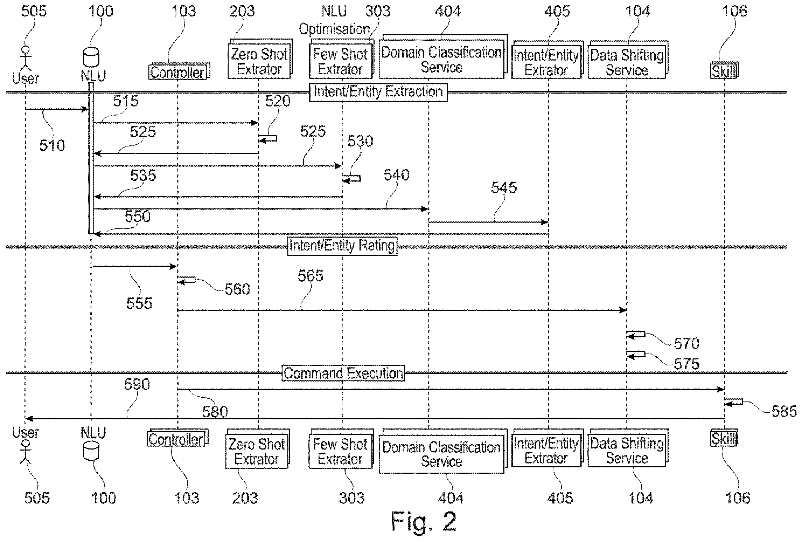

Nachstehend sollte die Erfindung ebenfalls im Zusammenhang mit Fig. 2 beschrieben werden:
Schritt 510: der Nutzer stellt eine Nutzeranfrage an seinen virtuellen Assistenten 99, insbesondere an die NLU-Engine 100.
Schritte 515, 525, 540: Wie vorstehend schon beschrieben kann die NLU-Engine 100 in mehrere Sub-NLUs unterteilt werden, die vorstehend als NLU-Engine-Module 203, 303, 404, 405 bezeichnet wurden. Hierbei erhält jedes NLU-Engine-Modul 203, 303, 404, 405 die Utterance 102 für die Bestimmung des Intens und der Entities der jeweiligen Nutzeranfrage 101. Fig. 2 zeigt insbesondere, dass die drei NLU-Engine-Module 203, 303, 405 die Nutzeranfrage 101 erhalten.
Schritte 520, 525, 530, 535, 540, 545: die NLU-Engine-Module 203, 303, 404, 405 extrahieren mit ihrem jeweilig implementierten Algorithmus, also der jeweiligen implementierten künstlichen Intelligenz, basierend auf den trainierten Daten aus der Utteracne 102 Intents (I), Entities (E), und/oder Domains (D) und optional auch eine Confidence (C), die angibt, mit welcher Genauigkeit die NLU-Engine-Module 203, 303, 405 jeweils das Ergebnis des Intents und der Entities extrahiert haben.
Schritt 555: die extrahierten Daten I, E und/oder C werden von den NLU-Engine-Modulen 203, 303, 405 an den Controller 103 weitergeleitet. Der Controller kann beispielsweise basierend auf der Confidence in Schritt 560 den sogenannten "fitting Score" - auch als Übereinstimmungscore bezeichnet - Sü berechnen.

Sü kann wie folgt berechnet werden:
- aus der Übereinstimmung der extrahierten Intents und/oder Domains. Die Übereinstimmung wird an der jeweiligen NLU Domain und den dazugehörigen Intents bestimmt. Wenn alle NLU-Engine Module dieselbe Domain oder sogar denselben Intent extrahiert haben, wird der Score Sü sehr hoch ausfallen.
- Generell ist die Übereinstimmung hinsichtlich der Entities sogar noch relevanter als die der Intents. So kommt es beispielsweise häufig vor, dass eine Entity verschiedenen Domains zugeordnet werden kann. Zum Beispiel der Entity Value RTL. Dies könnte ein TV-Sender, ein Radiosender oder auch die rechte Tischlampe in der Smart Home Domain sein. Stimmt die Kombination aus Domain, Intent und Entity entspricht dies in der Regel einem noch höheren Score Sü.
- Zudem kann der Controller 103 eingerichtet sein, gelieferte Daten auszuschließen, sobald diese eine sehr geringe Confidence/Genauigkeit aufweisen, da diese Daten für die weitere Verarbeitung im Hinblick auf eine Nutzerantwort nicht verwendet werden können. Es ist jedoch möglich, die als ausgeschlossenen markierten Daten im Folgenden als "negatives" Trainingsbeispiel zu verwenden.
- Der Controller 103 hat zudem die Möglichkeit, die Ergebnisse der verschiedenen NLU-Engine-Modulen 203, 303, 405 miteinander zu kombinieren, um eine bestmögliche Erkennung zu realisieren. Beispielsweise kann die Domain und der Intent aus einem der NLU-Engine-Module 203, 303, 405 verwendet werden, die Entities aber von einem der anderen Engine-Module 203, 303, 405.
- der berechnete Score Sü ist ein Maß dafür, wie gut die Utterance 102 von der gesamten NLU-Engine 100 erkannt wurde. Umso größer die Übereinstimmung mit den jeweiligen NLU-Engine-Module 203, 303, 404, 405 ist, desto größer ist der Wert von Sü. Die Confidence der einzelnen NLU-Engine-Module 203, 303, 404, 405 ist ein Maß dafür, wie gut die einzelnen NLU-Module 203, 303, 404, 405 die Utterance 102 erkannt haben.

Schritt 565: der Controller 103 leitet die Metadaten, also Intent, Entity, Confidence und Sü an die Data-Shifting-Einheit 104 weiter. Es ist die Hauptaufgabe der Data-Shifting-Einheit 104 zu entscheiden, ob die Metadaten verwendet werden, um die Trainingsdaten der NLU-Engine 100 zu erweitern oder nicht. Die Entscheidung kann auf den folgenden Kriterien basieren:
- ist der berechnete Score Sü unter dem bestimmten Grenzwert G_{T} werden die Metadaten als "Negative Learning" Datensatz verwendet. Damit kann ein NLU-Modul im Hinblick darauf trainiert werden, was eine falsche Anfrage bzw. eine falsch generierte Antwort im Hinblick auf die Anfrage ist. Somit fällt es den NLU-Engine-Modulen leichter negative Daten zu erkennen und diese zu klassifizieren. Die NLU-Engine 100 kann durch solch negative Beispiele im Umkehrschluss erkennen, ob eine Utterance nicht unterstützt wird und dies mit einer hohen Genauigkeit. Im Gegensatz zu einer geringen Genauigkeit bei der positiven Erkennung ist das Negativtraining ein weiterer Faktor zur einfachen Skalierung.
- Ist die Genauigkeit und/oder die Confidence der NLU-Engine-Module 203, 303 höher als die einer der NLU-Engine-Module 404, 405 werden die Daten für das Training im Zusammenhang mit dem großen Trainingsdatensatz 402 verwendet.
- Ist der Wert des berechneten Scores Sü über einem weiteren bestimmten Grenzwert, können die Metadaten auch zusätzlich dem sogenannten "Ground Truth" 403 in Schritt 575 hinzugefügt werden. Die "Ground Truth" 403 ist eine Menge von Daten umfassend Utterance und zugeordnete Intents und Entities für die eine Erkennungsrate von beispielsweise über 98 % besteht und die als Basis Trainingsplatz für weitere Trainings oder Testprozeduren verwendet werden können, wenn neue NLU Modelle getestet werden.
- Ist die Genauigkeit für eine der NLU-Engine-Module 203, 303, 404, 405 wiederholt sehr gering und beeinflusst dies die Genauigkeit von Sü negativ, kann die Data-Shifting-Einheit 104 Trainingsdaten für eine der NLU-Engine-Module 203, 303, 404, 405 entfernen. Dies bietet den Vorteil, dass Daten, die in vorliegenden Prozessen eventuell falsch gelernt wurden, nach einiger Zeit wieder entfernt werden können, ohne dass die gesamten Daten manuell bereinigt und bewertet werden müssen. Es ist möglich, dass diese Daten nicht komplett entfernt werden, sondern dass diese als negative Trainingsbeispiele verwendet werden.

Schritt 580: die Daten werden dem Skill 106 übermittelt, wobei der Skill in Schritt 558 eine Antwort im Hinblick auf die Nutzeranfrage generiert und in Schritt 590 an den Nutzer 505 sendet.

Im Zusammenhang mit den virtuellen Assistenten ist es häufig wünschenswert bzw. notwendig, Nutzerdaten für die Verarbeitung aus Datenschutzgründen zu maskieren, was in Schritt 570 durchgeführt werden kann.

Schritt 570: um die Daten von Kunden oder Nutzern direkt als Trainingsdaten oder Testdaten für den virtuellen Assistenten verwenden zu können, müssen nutzerspezifische Daten maskiert werden, wenn diese persönliche Informationen aufweisen. Wenn Utterances maskiert werden, können diese Daten in 90 % der Fälle nicht mehr verwendet werden, da die wichtigsten Informationen, beispielsweise die Entities, aus dem Nutzeranfrage entfernt werden. So wird beispielsweise der Befehl "Rufe 034325325354 an" zu "Rufe ***** an" oder "Schalte Miriams Licht an" zu "Schalte ***** an".

Für die Erkennung-Algorithmen einer NLU-Engine sind allerdings Trainingsdaten erforderlich, die sowohl eine Struktur im Satz selbst aufweisen, um die Intents zu erkennen, es aber auch ermöglichen Entities zu erkennen und zu extrahieren. Um diese Daten trotzdem entsprechend aufzubereiten, dass sie für das Training der NLU-Engine 100 verwendet werden können, kann die Data-Shifting-Einheit 104 die Inhalte von maskierten Entities gegen entsprechende Daten austauschen, die dieselbe Struktur aufweisen, aber keinen Rückschluss auf einen Kunden ermöglichen. Diese Daten kann die Data-Shifting-Einheit 104 aus der Datenbank 108 erhalten. Ist in der Datenbank 108 keine Ersetzungsregel für eine maskierte Entity vorhanden, kann die Utterance nicht für die NLU- Optimierung verwendet werden. Ansonsten wird der Inhalt der Entity gemäß definierter Regeln ersetzt. Der Grundgedanke dieser Ersetzung ist es, die Daten nicht einfach zu maskieren, sondern die maskierten Bereiche so zu ersetzen, dass die Daten weiterhin verwendet werden können, ohne dass persönliche Informationen der Nutzer verwendet werden müssen.

Dies soll anhand folgender Beispiele illustriert werden. i) "schalte Miriams Licht an" wird zu "schalte Supermans Licht an" oder ii) "Rufe Oma Müller an" wird zu "Rufe Oma an". Somit können alle Daten von Nutzern im System verarbeitet und auch für die Optimierung verwendet werden.

## Patentansprüche

1. Verfahren zum Bereitstellen von Trainingsdaten für einen virtuellen Assistenten, insbesondere des virtuellen Sprachassistenten, mit den folgenden Schritten:
• Vorhalten einer NLU-Engine (100) aufweisend eine erste NLU-Engine-Komponente (203, 303) und eine zweite NLU-Engine-Komponente (404, 405);
• Bereitstellen zumindest einer Nutzeranfrage (101) an die NLU-Engine (100), wobei die Nutzeranfrage (101) sowohl der ersten NLU-Engine-Komponente (203, 303) als auch der zweiten NLU-Engine-Komponente (404, 405) zugänglich gemacht wird, wobei sich die erste NLU-Engine-Komponente (203, 303) von der zweiten NLU-Engine-Komponente unterscheidet (404, 405);
• Analysieren der Nutzeranfrage mittels der ersten NLU-Engine-Komponente (203, 303) als auch mittels der zweiten NLU-Engine-Komponente (404, 405), wobei die erste NLU-Engine-Komponente (203, 303) einen ersten Bedeutungsinhalt BI₁ und die zweiten NLU-Engine-Komponente (404, 405) einen zweiten Bedeutungsinhalt BI₂ aus der Nutzeranfrage extrahiert.
• Berechnung eines Scores Sü im Hinblick auf eine Übereinstimmung der extrahierten Bedeutungsinhalte S_{Ü}=S_{Ü}(BI₁, BI₂), wobei der Wert des berechneten Scores Sü mit einem Grenzwert G_{H} verglichen wird und die Nutzeranfrage und/oder Metadaten der Nutzeranfrage bei Überschreitung des Grenzwertes zum Training des virtuellen Assistenten (99) verwendet wird.

2. Verfahren nach Anspruch 1, wobei zur Berechnung des Scores Sü die jeweiligen Ergebnisse der Bedeutungsinhalte BI₁ und BI₂ im Hinblick auf eine bestimmte Nutzeranfrage (101) miteinander verglichen werden.

3. Verfahren nach einem der vorhergehenden Ansprüche, wobei die erste NLU-Engine-Komponente (203, 303) und die zweite NLU-Engine-Komponente (404, 405) die zumindest eine Nutzeranfrage (101) parallel analysieren.

4. Verfahren nach einem der vorhergehenden Ansprüche, wobei die erste NLU-Engine-Komponente (203, 303) und die zweite NLU-Engine-Komponente (404, 405) auf verschiedenen Modellen und/oder Algorithmen basieren.

5. Verfahren nach einem der vorhergehenden Ansprüche, wobei die erste NLU-Engine-Komponente (203, 303) zumindest zwei NLU-Engine-Module und/oder die zweite NLU-Engine-Komponente (404, 405) zumindest zwei NLU-Engine-Module aufweist.

6. Verfahren nach Anspruch 5, wobei jede NLU-Engine-Komponente und/oder jedes NLU-Engine-Modul eine ihr zugeordnete Confidence Ci berechnet, die ihre Genauigkeit der richtigen Extrahierung der Bedeutungsinhalte wiedergibt.

7. Verfahren nach Anspruch 6, wobei die Metadaten zum Training der zweiten NLU-Engine-Komponente verwendet werden, wenn der Confidence Wert C₁ der ersten NLU-Engine-Komponente (203, 303) größer ist als der Confidence Wert C₂ der zweiten NLU-Engine-Komponente (404, 405).

8. Verfahren nach Anspruch 1, wobei der Scores Sü mit einem Grenzwert G_{T} verglichen wird und die Nutzeranfrage und/oder die Metadaten bei Unterschreitung des Grenzwertes G_{T} als falsches Ergebnis markiert wird und zum Training des virtuellen Assistenten verwendet wird und/oder dass die Nutzeranfrage und/oder die Metadaten verworfen wird, falls G_{T} < Sü < G_{H}.

9. Verfahren nach einem der vorhergehenden Ansprüche, wobei die Bedeutungsinhalte Intents und/oder Entities umfassen.

10. Verfahren nach Anspruch 9, wobei die extrahierten Intents und/oder Entities bei Überschreitung eines Grenzwertes Gs an einen Skill des virtuellen Assistenten weitergeleitet werden.

11. Verfahren nach einem der Ansprüche 9 bis 10, wobei die Intents und Entities zur Berechnung des Scores Sü verschiedenartig gewichtet werden.

12. Controller, insbesondere eingerichtet zur Ausführung der Schritte des Verfahrens nach einem der Ansprüche 1-11, zur vergleichenden Bewertung von Analysen von zumindest einer ersten NLU-Engine-Komponente (203, 303) und einer zweiten NLU-Engine-Komponente (404, 405) aufweisend
• einen ersten Kommunikationskanal eingerichtet zum Empfang der extrahierten Bedeutungsinhalte BI₁, BI₂ der ersten NLU-Engine-Komponente (203, 303) und der zweiten NLU-Engine-Komponente (404, 405);
• einen ersten Prozessor eingerichtet zur Berechnung eines Scores Sü im Hinblick auf eine Übereinstimmung der extrahierten Bedeutungsinhalte S_{Ü}=S_{Ü}(BI₁, BI₂), wobei der Prozessor eingerichtet ist zumindest den Sü, insbesondere Metadaten des Trainingsdatensatzes, weiterzuleiten;
• einen zweiten Kommunikationskanal eingerichtet zum Weiterleiten des Scores Sü, insbesondere der Metadaten.

13. Data-Shifting-Einheit, insbesondere eingerichtet zur Ausführung der Schritte des Verfahrens nach einem der Ansprüche 1-11, zur selektiven Weiterleitung von Daten aufweisend
• eine erste Kommunikationsschnittstelle eingerichtet zum Empfang des mittels des Controllers nach Anspruch 12 berechneten Scores S_{Ü}=S_{Ü}(BI₁, BI₂), insbesondere der Metadaten der Nutzeranfrage;
• einen zweiten Prozessor eingerichtet zum Vergleich des berechneten Scores Sü mit einem Grenzwert G_{H}, wobei der zweite Prozessor eingerichtet ist die Nutzeranfrage und/oder die Metadaten des bei Überschreitung des Grenzwertes zum Training eines virtuellen Assistenten weiterzuleiten;
• eine zweite Kommunikationsschnittstelle eingerichtet zur Weiterleitung der Nutzeranfrage und/oder Metadaten als Trainingsdatensatz.

14. Virtueller Assistent, insbesondere virtueller Sprachassistent, eingerichtet zur Ausführung des Verfahrens nach einem der Ansprüche 1 bis 11, aufweisend
• zumindest ein erstes Kommunikationsinterface eingerichtet zum Empfang von zumindest einer Nutzeranfrage;
• eine Recheneinheit, wobei auf der Recheneinheit zumindest eine erste NLU-Engine-Komponente zum Extrahieren eines ersten Bedeutungsinhalt BI₁ aus einer Nutzeranfrage und eine zweite NLU-Engine-Komponente zum Extrahieren eines zweiten Bedeutungsinhalt BI₂ aus der Nutzeranfrage implementiert ist, wobei die erste NLU-Engine-Komponente und die zweite erste NLU-Engine-Komponente voneinander verschieden ausgebildet sind;
• einen Controller nach Anspruch 12;
• eine Data-Shifting-Einheit nach Anspruch 13.

15. Computerprogramm, umfassend Befehle, die bei der Ausführung des Programms durch einen Computer diesen veranlassen, das Verfahren/die Schritte des Verfahrens nach Anspruch 1 auszuführen.

## Geänderte Patentansprüche

### Geänderte Patentansprüche gemäss Regel 137(2) EPÜ.

1. Verfahren zum Bereitstellen von Trainingsdaten für einen virtuellen Assistenten, insbesondere des virtuellen Sprachassistenten, mit den folgenden Schritten:
• Vorhalten einer NLU-Engine (100) aufweisend eine erste NLU-Engine-Komponente (203, 303) und eine zweite NLU-Engine-Komponente (404, 405);
• Bereitstellen zumindest einer Nutzeranfrage (101) an die NLU-Engine (100), wobei die Nutzeranfrage (101) sowohl der ersten NLU-Engine-Komponente (203, 303) als auch der zweiten NLU-Engine-Komponente (404, 405) zugänglich gemacht wird, wobei sich die erste NLU-Engine-Komponente (203, 303) von der zweiten NLU-Engine-Komponente unterscheidet (404, 405);
• Analysieren der Nutzeranfrage mittels der ersten NLU-Engine-Komponente (203, 303) als auch mittels der zweiten NLU-Engine-Komponente (404, 405), wobei die erste NLU-Engine-Komponente (203, 303) einen ersten Bedeutungsinhalt BI₁ und die zweiten NLU-Engine-Komponente (404, 405) einen zweiten Bedeutungsinhalt BI₂ aus der Nutzeranfrage extrahiert.
• Berechnung eines Scores Sü im Hinblick auf eine Übereinstimmung der extrahierten Bedeutungsinhalte Sü=Sü(BI₁, BI₂), wobei der Wert des berechneten Scores Sü mit einem Grenzwert G_{H} verglichen wird und die Nutzeranfrage und/oder Metadaten der Nutzeranfrage bei Überschreitung des Grenzwertes zum Training des virtuellen Assistenten (99) verwendet wird.

2. Verfahren nach Anspruch 1, wobei zur Berechnung des Scores Sü die jeweiligen Ergebnisse der Bedeutungsinhalte BI₁ und BI₂ im Hinblick auf eine bestimmte Nutzeranfrage (101) miteinander verglichen werden.

3. Verfahren nach einem der vorhergehenden Ansprüche, wobei die erste NLU-Engine-Komponente (203, 303) und die zweite NLU-Engine-Komponente (404, 405) die zumindest eine Nutzeranfrage (101) parallel analysieren.

4. Verfahren nach einem der vorhergehenden Ansprüche, wobei die erste NLU-Engine-Komponente (203, 303) und die zweite NLU-Engine-Komponente (404, 405) auf verschiedenen Modellen und/oder Algorithmen basieren.

5. Verfahren nach einem der vorhergehenden Ansprüche, wobei die erste NLU-Engine-Komponente (203, 303) zumindest zwei NLU-Engine-Module und/oder die zweite NLU-Engine-Komponente (404, 405) zumindest zwei NLU-Engine-Module aufweist.

6. Verfahren nach Anspruch 5, wobei jede NLU-Engine-Komponente und/oder jedes NLU-Engine-Modul eine ihr zugeordnete Confidence Ci berechnet, die ihre Genauigkeit der richtigen Extrahierung der Bedeutungsinhalte wiedergibt.

7. Verfahren nach Anspruch 6, wobei die Metadaten zum Training der zweiten NLU-Engine-Komponente verwendet werden, wenn der Confidence Wert C₁ der ersten NLU-Engine-Komponente (203, 303) größer ist als der Confidence Wert C₂ der zweiten NLU-Engine-Komponente (404, 405).

8. Verfahren nach Anspruch 1, wobei der Scores Sü mit einem Grenzwert G_{T} verglichen wird und die Nutzeranfrage und/oder die Metadaten bei Unterschreitung des Grenzwertes G_{T} als falsches Ergebnis markiert wird und zum Training des virtuellen Assistenten verwendet wird und/oder dass die Nutzeranfrage und/oder die Metadaten verworfen wird, falls G_{T} < Sü < G_{H}.

9. Verfahren nach einem der vorhergehenden Ansprüche, wobei die Bedeutungsinhalte Intents und/oder Entities umfassen.

10. Verfahren nach Anspruch 9, wobei die extrahierten Intents und/oder Entities bei Überschreitung eines Grenzwertes Gs an einen Skill des virtuellen Assistenten weitergeleitet werden.

11. Verfahren nach einem der Ansprüche 9 bis 10, wobei die Intents und Entities zur Berechnung des Scores Sü verschiedenartig gewichtet werden.

12. Controller zur vergleichenden Bewertung von Analysen von zumindest einer ersten NLU-Engine-Komponente (203, 303) und einer zweiten NLU-Engine-Komponente (404, 405) aufweisend
• einen ersten Kommunikationskanal eingerichtet zum Empfang eines extrahierten Bedeutungsinhalte BI₁ einer ersten NLU-Engine-Komponente (203, 303) und zum Empfang eines extrahierten Bedeutungsinhalte BI₂ einer zweiten NLU-Engine-Komponente (405, 405);
• BI₂ der ersten NLU-Engine-Komponente (203, 303) und der zweiten NLU-Engine-Komponente (404, 405);
• einen ersten Prozessor eingerichtet zur Berechnung eines Scores Sü im Hinblick auf eine Übereinstimmung der extrahierten Bedeutungsinhalte Sü=Sü(BI₁, BI₂), wobei der Prozessor eingerichtet ist zumindest den Sü, insbesondere Metadaten des Trainingsdatensatzes, weiterzuleiten;+
• einen zweiten Kommunikationskanal eingerichtet zum Weiterleiten des Scores Sü, insbesondere der Metadaten.

13. Data-Shifting-Einheit zur selektiven Weiterleitung von Daten aufweisend
• eine erste Kommunikationsschnittstelle eingerichtet zum Empfang eines Scores Sü=Sü(BI₁, BI₂), wobei BI₁ ein extrahierter Bedeutungsinhalte einer ersten NLU-Engine-Komponente (203, 303) von einer Nutzeranfrage ist, wobei BI₂ ein extrahierter Bedeutungsinhalte einer zweiten NLU-Engine-Komponente von der Nutzeranfrage ist und wobei Sü ein Score im Hinblick auf eine Übereinstimmung der extrahierten Bedeutungsinhalte Sü=Sü(BI₁, BI₂) ist;einen zweiten Prozessor eingerichtet zum Vergleich des berechneten Scores Sü mit einem Grenzwert G_{H}, wobei der zweite Prozessor eingerichtet ist die Nutzeranfrage und/oder die Metadaten des bei Überschreitung des Grenzwertes zum Training eines virtuellen Assistenten weiterzuleiten;
• eine zweite Kommunikationsschnittstelle eingerichtet zur Weiterleitung der Nutzeranfrage und/oder Metadaten als Trainingsdatensatz.

14. Virtueller Assistent aufweisend
• zumindest ein erstes Kommunikationsinterface eingerichtet zum Empfang von zumindest einer Nutzeranfrage;
• eine Recheneinheit, wobei auf der Recheneinheit zumindest eine erste NLU-Engine-Komponente zum Extrahieren eines ersten Bedeutungsinhalt BI₁ aus einer Nutzeranfrage und eine zweite NLU-Engine-Komponente zum Extrahieren eines zweiten Bedeutungsinhalt BI₂ aus der Nutzeranfrage implementiert ist, wobei die erste NLU-Engine-Komponente und die zweite erste NLU-Engine-Komponente voneinander verschieden ausgebildet sind;
• einen Controller nach Anspruch 12;
• eine Data-Shifting-Einheit nach Anspruch 13.

15. Computerprogramm, umfassend Befehle, die bei der Ausführung des Programms durch einen Computer diesen veranlassen, das Verfahren/die Schritte des Verfahrens nach Anspruch 1 auszuführen.
